# EUROPÄISCHE PATENTANMELDUNG

(11) **EP 1 236 700 A1**
(43) Veröffentlichungstag der Anmeldung: **04.09.2002**
(21) Anmeldenummer: 02003517.6
(22) Anmeldetag: 15.02.2002
(51) Int. Cl.: C04B 28/02, C04B 24/12

(54) **Hydraulisch abbindende Massen enthaltend Alkylamine**

(30) Priorität: 01.03.2001 DE 10109995
(71) Anmelder: BASF AKTIENGESELLSCHAFT, 67056 Ludwigshafen (DE)
(72) Erfinder: Oppenländer, Knut, Dr., 67061 Ludwigshafen (DE); Pauksch, Joachim, Dr., 67346 Speyer (DE)

(57) **Zusammenfassung**

Verwendung von Verbindungen der Formel I 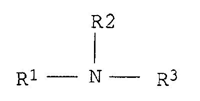 worin die Reste R¹,R² und R³ unabhängig voneinander für ein Wasserstoffatom oder eine organische Gruppe mit 1 bis 40 C-Atomen stehen, mit der Maßgabe, dass mindestens einer der R¹ bis R³ für eine organische Gruppe mit 10 bis 40 C-Atomen steht,
oder von Salzen der vorstehenden Verbindungen
als Zusatzmittel für mineralische Bindemittel.

## Beschreibung

Die Erfindung betrifft die Verwendung von Verbindungen der Formel I 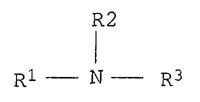 worin die Reste R¹, R² und R³ unabhängig voneinander für ein Wasserstoffatom oder eine organische Gruppe mit 1 bis 40 C-Atomen stehen, mit der Maßgabe, dass mindestens einer der R¹ bis R³ für eine organische Gruppe mit 10 bis 40 C-Atomen steht,
oder von Salzen der vorstehenden Verbindungen
als Zusatzmittel für mineralische Bindemittel.

Weiterhin betrifft die Erfindung hydraulisch abbindende Massen, enthaltend Verbindungen der Formel I oder Salze dieser Verbindungen.

Durch Zusatz von Additiven zu hydraulisch abbindenden Massen können die anwendungstechnischen Eigenschaften verändert bzw. eingestellt werden. So ist bekannt, dass durch Zusatz von Hydrophobierungsmitteln die Wasseraufnahme von hydraulisch abbindenden Massen verringert wird. In DE-A-27 00 890 wird z.B. Kalk durch Zusatz von Stearaten hydrophobiert. EP-A-500 637 beschreibt den Zusatz von Metallsalzen der Fettsäuren.

Gegenstand von DE-A-19 914 367 ist der Zusatz von Amidobetainen, Ethercarbonsäuren oder Alkylbetainen insbesondere zu Gips.

Die bisher bekannten Hydrophobierungsmittel sind in ihrer Wirkung oft noch unzureichend oder werden für eine ausreichende Wirkung in hohen Mengen benötigt.

Aufgabe der Erfindung waren daher Verbindungen mit einer verbesserten Hydrophobierungswirkung bzw. mit einer verbesserten Wirksamkeit bei geringerer Menge.

Demgemäß wurde die eingangs definierte Verwendung der Verbindungen der Formel I gefunden. Gefunden wurden auch hydraulisch abbindende Massen, welche Verbindungen der Formel I enthalten.

Bei den Verbindungen der Formel I handelt es sich um primäre, sekundäre oder tertiäre Amine oder deren Salze.

Die Reste R¹ bis R³ stehen unabhängig voneinander für ein H-Atom oder eine organische Gruppe mit 1 bis 40 C-Atomen, mit der Maßgabe, dass mindestens einen der Reste R¹ bis R³ für eine organische Gruppe mit 10 bis 40 C-Atomen steht.

Generell handelt es sich im Fall der organischen Gruppen bevorzugt um Kohlenwasserstoffgruppen, d.h. diese Gruppen bestehen nur aus Kohlenstoff und Wasserstoff. Es kann sich um gesättigte oder ungesättigte Kohlenwasserstoffgruppen handeln, bevorzugt sind gesättigte Kohlenwasserstoffgruppen. Es handelt sich daher insbesondere um Alkylgruppen.

Bevorzugt stehen ein, zwei oder alle drei Reste R¹-R³ für eine C₁₀-C₃₀ Alkylgruppen, besonders bevorzugt für eine C₁₂ bis C₂₆, ganz besonders bevorzugt für eine C₁₄ bis C₂₂ Alkylgruppe, z.B. für eine Stearylgruppe (C₁₈ H₃₇).

Im Falle, dass nur ein oder zwei der Reste R¹-R³ für eine derartige Alkylgruppe stehen, steht der bzw. stehen die beiden anderen Reste bevorzugt für ein H-Atom oder gegebenenfalls für eine kurzkettige Alkylgruppe, z.B. eine C₁-C₈ Alkylgruppe. Besonders bevorzugt steht der oder stehen die verbleibenden Reste für ein H-Atom.

### Als geeignete Verbindungen der Formel I seien exemplarisch

Stearylamin, Distearylamin oder Tristearylamin genannt.

Neben der Verbindungen der Formel I können auch deren Salze Verwendung finden.

Im Betracht kommen insbesondere die Carbonsäuresalze, in denen die Carbonsäure als Anion (R⁴COO^{⊖}) und die Verbindung der Formel I als Kation vorliegt (HN^{⊕}R₁R₂R₃).

Insbesondere handelt es sich dabei um das Salz einer aliphatischen Carbonsäure. Bevorzugt besteht die Carbonsäure aus insgesamt 10 bis 40, vorzugsweise 14 bis 30 C-Atomen. Entsprechend steht R⁴ für einen organischen Rest, insbesondere eine C₉-C₃₉-, besonders bevorzugt C₁₃-C₂₉-Alkylgruppe.

Genannt seien beipielsweise die Salze von Fettsäuren, z.B. Stearinsäure.

Die Verbindungen der Formel I bzw. ihre Salze werden als Zusatzmittel zu mineralischen Bindemitteln verwendet.

Als mineralische Bindemittel in Betracht kommen insbesondere hydraulisch abbindende Bindemittel, d.h. Bindemittel, die nach Zusatz von Wasser aushärten.

Als hydraulische Bindemittel genannt seien Gips, Kalk, Ton und Zement. Bevorzugtes Bindemittel ist Zement. In Betracht kommt Hochofenzement Ölschieferzement, Portlandzement, hydrophobierter Portlandzement, Schnellzement, Tonerdezement oder Quellzement. Ganz besonders bevorzugt ist Portlandzement.

Die mineralischen Bindemittel werden in der Bauindustrie im Baustoff- oder Klebstoffzubereitungen verwendet.

Bei den Baustoffzubereitungen handelt es sich z.B. um Zubereitungen für Putze, Estrische, um Maurerspeis oder um Beton.

Bei den Klebstoffzubereitungen handelt es sich z.B. um Fliesenklebstoffe.

Die erfindungsgemäßen Baustoff- oder Klebstoffzubereitungen enthalten neben dem mineralischen Bindemittel und der Verbindung der Formel I, bzw. deren Salz, gegebenenfalls weitere Zusatzstoffe.

In Betracht kommen insbesondere mineralische Zuschläge wie Quarzsand, Kies, Füllstoffe wie Calciumcarbonat, Pigmente wie Titandioxid, Eisenoxid.

Weiterhin können die Zubereitungen Polymerisatpulver enthalten. Im Falle der Baustoffzubereitungen dienen Polymerisatpulver insbesondere der Verbesserung der mechanischen Eigenschaften, z.B., einer erhöhten Elastizität der ausgehärteten Baustoffe.

Im Falle der Klebstoffzubereitungen dienen die Polymerisatpulver oft zur Erhöhung der Klebrigkeit.

Weitere Hilfsmittel in den Baustoff- oder Klebstoffzubereitungen können z.B. Entschäumer, Verdicker, Weichmacher, Biozide etc. sein.

Bei den Baustoff- oder Klebstoffzubereitungen handelt es sich zunächst um Trockenzubereitungen. Die Bestandteile werden als Festsubstanz, im allgemeinen in Form von Pulvern gemischt.

Die Verbindungen der Formel I oder deren Salze werden bevorzugt in diese Trockenzubereitung eingemischt. Es ist auch möglich, die Verbindungen zunächst mit anderen Bestandteilen zu mischen, z.B. dem Polymerisatpulver, und dieses Gemisch dann zur Trockenzubereitung zu geben.

Die Baustoff- oder Klebstoffzubereitung enthält bevorzugt 0,1 bis 10 Gew.-Teile, besonders bevorzugt 0,2 bis 2 Gew.-Teile der Verbindungen der Formel I oder deren Salze bezogen auf 100 Gew.-Teile Trockenzubereitung, d.h. auf die Summe aller Bestandteile der Zubereitung mit Ausnahme von Wasser.

Der Anteil des mineralischen Bindemittels, vorzugsweise Zement kann deutlich unterschiedlich sein, z.B. je nachdem ob es sich um eine Baustoff- oder Klebstoffzubereitung handelt; im allgemeinen liegt der Gehalt bei 5 bis 90, insbesondere 10 bis 50 Gew.-Teilen, bezogen auf 100 Gew.-Teile Trockenzubereitung.

### Beispiele

### I Hydrophobierungsmittel

- erfindungsgemäß:: Beispiele B1-B4
- zum Vergleich:: Vergleichsbeispiele V1-V4

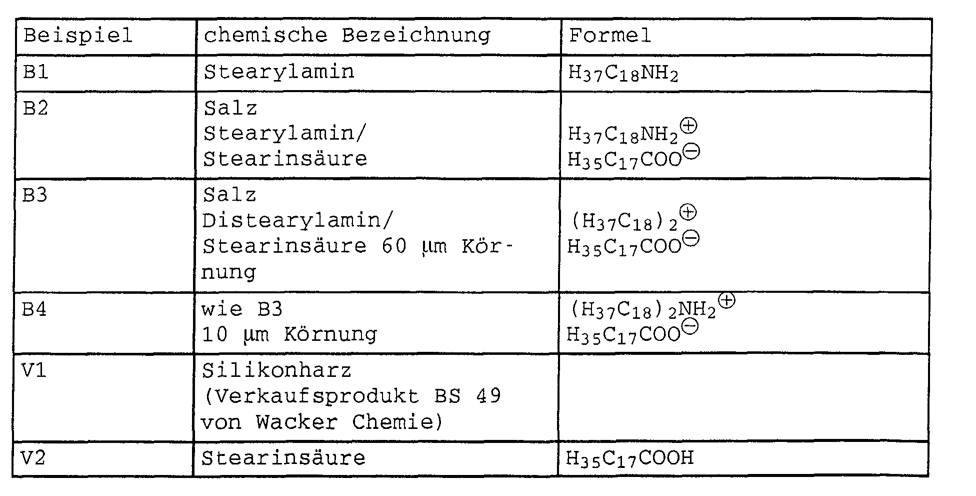

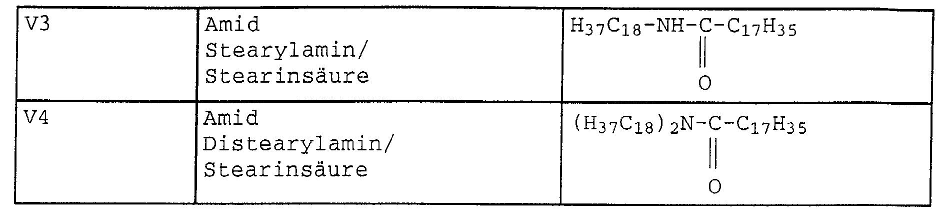

### Angaben zur Herstellung der Hydrophobierungsmittel

### Salz Stearylamin/Stearinsäure (B2)

| Menge | mol | Substanz |
|---|---|---|
| 85,2 g | 0,3 | Stearinsäure und |
| 80,7 g | 0,3 | Octadecylamin zusammen aufschmelzen bei ca. 80°C 1h rühren lassen, in einer Alumiumschale abkühlen lassen herausbrechen und mahlen. |
| | | |
| | | 156,85 g (Weises Pulver) |

### Salz Distearylamin/Stearinsäure (B3, B4)

| Menge | mol | |
|---|---|---|
| 312,6 g | 0,6 | Distearylamin |
| 170,49 g | 0,6 | Stearinsäure |

Bei 90°C eine Stunde rühren.

### Amid Stearylamin/Stearinsäure (V3)

| Menge | mol | |
|---|---|---|
| 85,2 g | 0,3 | Stearinsäure |
| 80,7 g | 0,3 | Stearylamin |

### Versuchsdurchführung:

Bei 170°C rühren, bis kein Wasser mehr abdestilliert.
Ausfüllen, mahlen.

### Amid Distearylamin/Stearinsäure (V4)

| Menge | mol | |
|---|---|---|
| 56,8 g | 0,2 | Stearinsäure |
| 104,2 g | 0,2 | Distearylamin |

### Versuchsdurchführung:

Bei 200°C rühren bis kein Wasser mehr abdestilliert.

### II Anwendungstechnische Prüfung

Die Hydrophobierungsmittel wurden mit Zementmörtel (Norm-Mörtel gemäß EN 196-1) gemischt.

Der Gewichtsanteil der Hydrophobierungsmittel betrug 0,5 Gew.-Teile auf 100 Gew.-Teile Trockensubstanz. Der Mörtel wurde mit Wasser gemischt.

Die Prüfung der Wasseraufnahme erfolgte gemäß EN 196-1.

Der Zementmörtel wird in die halbierte Probekörperform nach EN 196-1 eingefüllt.

Nach 28 Tagen Lagerzeit (Normklima, 21°C, 1 bar) wurde die Wasseraufnahme bestimmt.

Das Ausgangsgewicht der Probekörper wird bestimmt und in 15 mm Höhe auf allen 4 Seiten des Probekörpers eine Markierungslinie angebracht. Der Probekörper wird in ein Becherglas gehängt, so da 1 cm Platz bleibt zwischen Becherglasboden und Unterseite des Probekörpers.

Zum Beginn der Prüfung werden die Bechergläser mit Trinkwasser bis zur Markierung der Probekörper aufgefüllt und waagrecht ausgerichtet. Die Proben tauchen nun frei hängend 15 mm tief im Wasser ein. Zum jeweiligen Prüfzeitpunkt werden die Probekörper aus dem Wasser entnommen, mit einem Handtuch oberflächlich abgetrocknet und erneut gewogen. Nach der letzten Wägung (24 Stunden) wird mittels Hammer und Meisel der Probekörper in Längsrichtung aufgespalten und die Eindringtiefe des Wassers auf einen Millimeter genau gemessen.

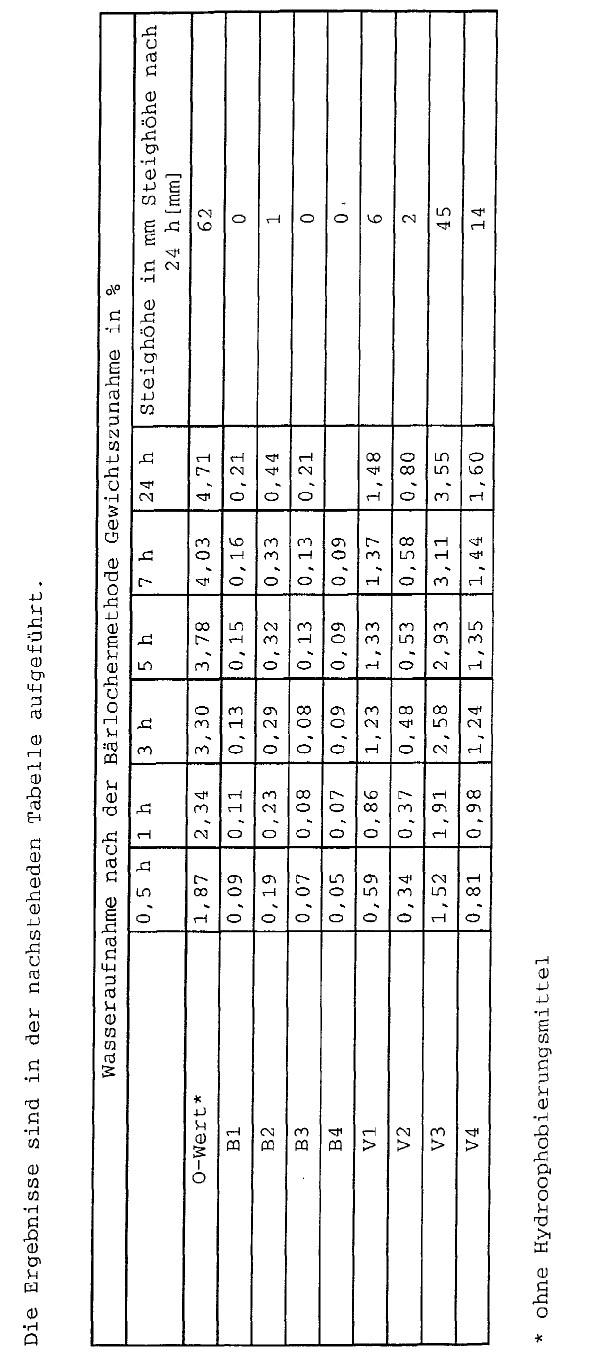

## Patentansprüche

1. Verwendung von Verbindungen der Formel I 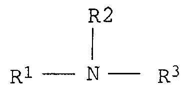 worin die Reste R¹, R² und R³ unabhängig voneinander für ein Wasserstoffatom oder eine organische Gruppe mit 1 bis 40 C-Atomen stehen, mit der Maßgabe, dass mindestens einer der R¹ bis R³ für eine organische Gruppe mit 10 bis 40 C-Atomen steht,
oder von Salzen der vorstehenden Verbindungen
als Zusatzmittel für mineralische Bindemittel.

2. Verwendung gemäß Anspruch 1, wobei es sich bei den organischen Gruppen um gesättigte Kohlenwasserstoffgruppen handelt

3. Verwendung gemäß einem der Ansprüche 1 oder 2, wobei ein, zwei oder drei der Reste R¹ bis R³ für eine C₁₀ bis C₃₀ Alkylgruppe stehen.

4. Verwendung gemäß einem der Ansprüche 1 bis 3, wobei es sich bei dem Zusatzmittel um ein Carbonsäuresalz der Verbindung der Formel I handelt.

5. Verwendung gemäß Ansprüche 4, wobei es sich um das Salz einer aliphatischen Carbonsäure mit 10 bis 40 C Atomen handelt.

6. Baustoff- oder Klebstoffzubereitungen, enthaltend mineralische Bindemittel und eine Verbindung der Formel I oder deren Salz

7. Baustoff- oder Klebstoffzubereitungen gemäß Anspruch 6, enthaltend 0,1 Gew.-Teile bis 10 Gew.-Teile der Verbindungen I oder deren Salz bezogen auf 100 Gew.-Teile Trockensubstanz, d.h. bezogen auf die Summe aller Bestandteile des Gemisches mit Ausnahme von Wasser

8. Baustoff- oder Klebstoffzubereitungen gemäß Anspruch 6 oder 7, wobei es sich bei dem mineralischen Bindemittel um ein hydraulisch abbindendes Bindemittel handelt.
